# EUROPÄISCHE PATENTSCHRIFT

(11) **EP 0 718 065 B1**
(45) Veröffentlichungstag und Bekanntmachung des Hinweises auf die Patenterteilung: **05.04.2000**
(21) Anmeldenummer: 95119178.2
(22) Anmeldetag: 06.12.1995
(51) Int. Cl.: B23D 35/00, B23D 19/06

(54) **Scheranlage zum Besäumen von Flachmaterial, insbesondere von Blechen und Bändern aus Metall**
Trimming device for sheets and bands
Cisaille pour rogner des feuilles et des tôles

(30) Priorität: 23.12.1994 DE 4446267
(43) Veröffentlichungstag der Anmeldung: 26.06.1996
(73) Patentinhaber: SMS SCHLOEMANN-SIEMAG AKTIENGESELLSCHAFT, 40237 Düsseldorf (DE)
(72) Erfinder: Sohl, Ralf-Hartmut, D-42697 Solingen (DE); Berg, Robert, D-40764 Langenfeld (DE)
(74) Vertreter: Valentin, Ekkehard, Dipl.-Ing.

(56) Entgegenhaltungen:
- EP-A- 0 289 799
- AT-A- 373 805

## Beschreibung

Die Erfindung betrifft eine Scheranlage zum Besäumen von Flachmaterial, insbesondere von Blechen und Bändern aus Metall, bestehend aus einer Kreismesserschere mit in einem Ober- und einem Untermessergehäuse gelagerten, die Kreismesser tragenden Kreismesserwellen, wobei zur Einstellung des Messerspaltes und der Messerüberdeckung in Abhängigkeit von der Materialdicke und -festigkeit zwischen dem oberen und dem unteren Scherengehäuse ein diese Gehäuseteile verbindender Querexenter angeordnet ist, und einer Mittenschnittschere, die in einem Ober- und Untermessergehäuse gelagerte, Kreismesser tragende Kreismesserwellen aufweist.

Kreismesserscheren dieser Art werden vor allem in Anlagen zur Bandbehandlung, z.B. in Beiz-, Feuerverzink-, Scherenlinien etc. eingesetzt, um die beiden Bandkanten abzutrennen, wobei das Band möglichst auf eine unter der Maßgabe geringer Toleranzen genaue Bandbreite gebracht werden soll. Um dabei saubere Schneidkanten zu erzielen, ist es erforderlich, den Messerspalt und die Messerüberdeckung in Abhängigkeit von der Materialdicke und -festigkeit des gerade zu schneidenden Bandes einzustellen. Hierbei wird unter dem Messerspalt der im wesentlichen waagerechte Abstand zwischen den Schneidkantenebenen der beiden übereinanderliegenden Kreismesser verstanden, der üblicherweise mit zunehmender Materialdicke größer gewählt wird. Die Messerüberdeckung ist das Maß des vertikalen Abstandes der Schneidkanten der beiden korrespondierenden Kreismesser während des Schnittes; sie ist positiv, wenn sich die Kreismesser in der waagerechten Projektion tatsächlich im Schneidbereich überdecken.

Zum Einstellen der Schneidkantenstellung hinsichtlich Messerspalt und -überdeckung ist durch die EP 0 289 799 A eine Einrichtung - im folgenden Messerspalt-Verstelleinrichtung - bekanntgeworden, die ein einfaches und in der Praxis hervorragend bewährtes Einstellen ermöglicht. Der Obermesserträger der Kreismesserschere ist dort als Koppel eines Gelenkvierecks ausgebildet, so daß es möglich ist, durch Auslegung von Abmessungen der Gelenkteile und des Drehbereichs der Kurbel mit einer bestimmten Stelle der Koppel eine gewünschte Raumkurve (Koppelkurve) zu beschreiben. Das Gestell des Gelenkvierecks wird von dem Untermessergehäuse definiert, und die Kurbel besteht aus einem quer zu den Kreismesserwellen verlaufenden - im folgenden Querexzenter genannt - Exzenter, der am messerseitigen Ende des Obermessergehäuses angreift und dessen Exzenterhub sowie Totpunktlage so gewählt sind, daß jeder Punkt des oberen Kreismessers bei einer reversierbaren Drehverstellung des von einem Getriebemotor mit Bremse verstellbaren Querexzenters einer gewünschten Raumkurve folgt. Der Querexzenter greift mit einer Nase am messerseitigen Ende in das Obermessergehäuse ein, und seine Drehverstellung bestimmt folglich den Verlauf sowie die Größenordnung der Schneidenanstellung.

Bei der Produktion von breiten Bändern, Blechen oder dergleichen ist neben dem Besäumschnitt mittels der beiden einander gegenüberliegenden Kreismesserscheren außerdem ein Mittenschnitt gefordert, um das breite Band in zwei gleiche Schmalbandbreiten zu unterteilen. Bei den mit Kreismesserbesäumscheren kombinierten, bekannten Mittenschnittscheren hat es sich als problematisch herausgestellt, die zulässigen kleinen Bandbreitentoleranzen einzuhalten; außerdem hat sich gezeigt, daß die von der vorbeschriebenen Kreismesserbesäumschere bekannte Messerspalt-Verstelleinrichtung mittels zwischen dem oberen und dem unteren Messergehäuse reversierbar angeordnetem Querexzenter aufgrund der Bauweise der bekannten Mittenschnittscheren nicht geeignet ist.

Der Erfindung liegt daher die Aufgabe zugrunde, bei einer Scheranlage der eingangs genannten Art eine verbesserte Betriebsweise der Mittenschnittschere zu ermöglichen, insbesondere auch die Mittenschnittschere mit einer Messerspaltverstelleinrichtung auszubilden und kleine Bandbreitentoleranzen des geschnittenen Flachmaterials zu erreichen.

Diese Aufgabe wird erfindungsgemäß durch einen die Mittenschnittschere tragenden Rahmen und eine einen reversierbaren Querexzenter aufweisende Messerspalt-Verstelleinrichtung gelöst, die zwischen dem Rahmen und dem oberen Kreismesser der Mittenschnittschere angeordnet ist und mit dem Querexzenter am messerseitigen Ende des beweglich ausgebildeten Obermessergehäuses angreift. Die Anordnung der Mittenschnittschere in einem separaten Rahmen ermöglicht es einerseits, die bei Kreismesserbesäumscheren bewährte, vorbeschriebene Messerspalt-Verstelleinrichtung nunmehr auch an der Mittenschnittschere zu verwirklichen und damit in einfacher Weise optimierte Schneidkanteneinstellungen vorzunehmen. Das in einer Rahmen-Tragkonstruktion angeordnete Obermessergehäuse läßt sich nämlich unabhängig von dem Untermessergehäuse, das vorteilhaft fest mit dem Rahmen verbunden sein kann, beweglich in dem Rahmen vorsehen.

Vorzugsweise ist das Obermessergehäuse der Mittenschnittschere beweglich in einem in Bandlängsrichtung galgenartig vorspringenden Tragarm des Rahmens eingehängt. Der in dem Tragarm gelagerte Querexzenter kann, wie bei den bekannten Kreismesserbesäumscheren, mit einer Nase in das beweglich in den Tragarm eingehängte Obermessergehäuse eingreifen, so daß sich auch bei der Mittenschnittschere der Verlauf sowie die Größenordnung der Schneidenanstellung mittels der Drehverstellung des Querexzenters bestimmen lassen. Außerdem läßt sich für die Mittenschnittschere eine Betriebsposition erreichen, bei der deren Kreismesser auf der gleichen Achse wie die Kreismesser der Besäumscheren liegen, was es gestattet, kleine Bandbreitentoleranzen einzuhalten.

Nach einer bevorzugten Ausgestaltung der Erfindung ist der Rahmen der Mittenschnittschere höhenverstellbar in einem Außenrahmen angeordnet, dort vorzugsweise auf Vertikalführungen gelagert. Der Einbau des Rahmens der Mittenschnittschere in einen Außenrahmen unterstützt es, die in der Betriebsposition auf einer Achse liegenden Kreismesser vorzusehen. Die vertikale Höhenverstellbarkeit der Mittenschnittschere schafft außerdem die Voraussetzung für einen variablen Einsatz der Scheranlage, die sich nämlich bei einem Programmwechsel, d.h. beim Übergang auf schmalere Bänder ausschließlich als Besäumschere betreiben läßt. Die Mittenschnittschere braucht in diesem Fall lediglich in eine Außerbetriebsposition angehoben zu werden, was es gestattet, den Abstand der beiden einander gegenüberliegenden Kreismesserbesäumscheren entsprechend der schmaleren Breite des einlaufenden Bandes zu verringern.

Zum Anheben und Absenken der Mittenschnittschere läßt sich deren Rahmen eine Hubeinrichtung zuordnen. Diese kann, wenn der Außenrahmen vorzugsweise auf einer Sohlplatte angeordnet ist, gemäß einer Ausgestaltung der Erfindung aus einerseits an der Sohlplatte befestigten und andererseits mit ihren Kolbenstangen am Rahmen der Mittenschnittschere angreifenden Stellzylindern bestehen. Als Zylinder der Hubeinrichtung eignen sich Pneumatik- oder Hydraulikzylinder.

Weitere Einzelheiten und Vorteile der Erfindung ergeben sich aus den Patentansprüchen und der nachfolgenden Beschreibung, in der ein Ausführungsbeispiel des Gegenstandes der Erfindung näher erläutert ist. Es zeigen:
- Figur 1: in der Vorderansicht eine Scheranlage, die aus einer zwei einander gegenüberliegende Schneideinheiten besitzenden Kreismesserbesäumschere und einer damit kombinierten Mittenschnittschere besteht;
- Figur 2: die Scheranlage nach Fig. 1 entlang der Linie II-II geschnitten;
- Figur 3: eine Draufsicht der Scheranlage; und
- Figur 4: als Einzelheit einen Längsschnitt durch das Ober- und Untermessergehäuse der Mittenschnittschere.

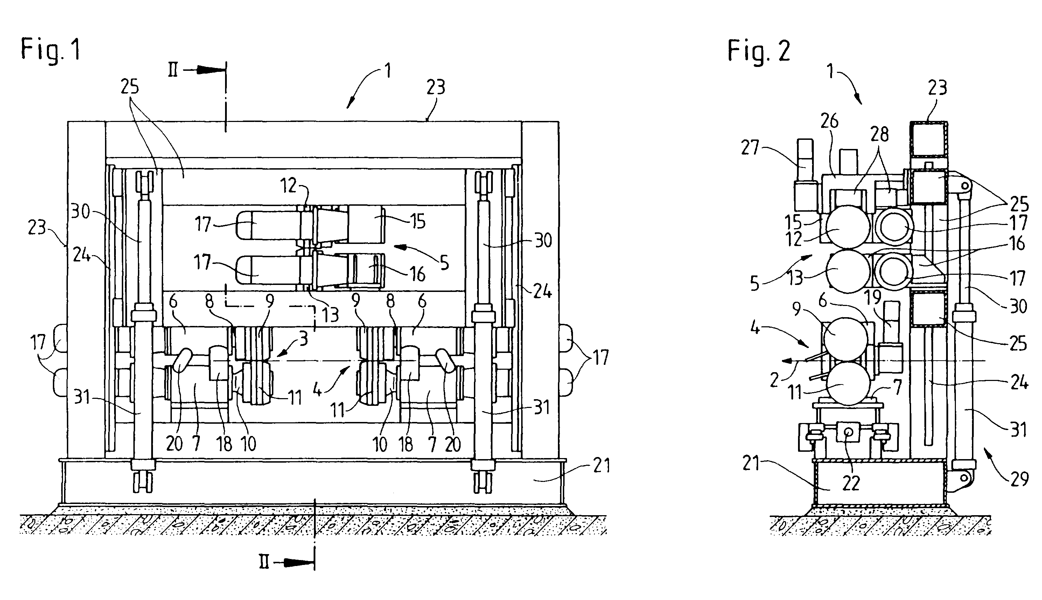

Eine Scheranlage 1, mit der sich Flachmaterial, insbesondere von Blechen und Bändern aus Metall, sowohl besäumen als auch in der Mitte in zwei gleichbreite Schmalbandstreifen unterteilen läßt, weist nach Fig. 1 eine an jeder Bandkante des in Fig. 1 in der Zeichnungsebene in Bandlaufrichtung 2 (vgl. Fig. 2) durchlaufenden Bandes angeordnete Kreismesserschere 3 bzw. 4 sowie eine diesen zugeordnete Mittenschnittschere 5 auf. Die Kreismesserscheren 3, 4 bestehen aus einem oberen Messergehäuse 6, einem unteren Messergehäuse 7, einer im oberen Messergehäuse 6 gelagerten oberen Kreismesserwelle 8 mit Kreismesser 9 und einer im unteren Messergehäuse 7 gelagerten unteren Kreismesserwelle 10 mit unterem Kreismesser 11.

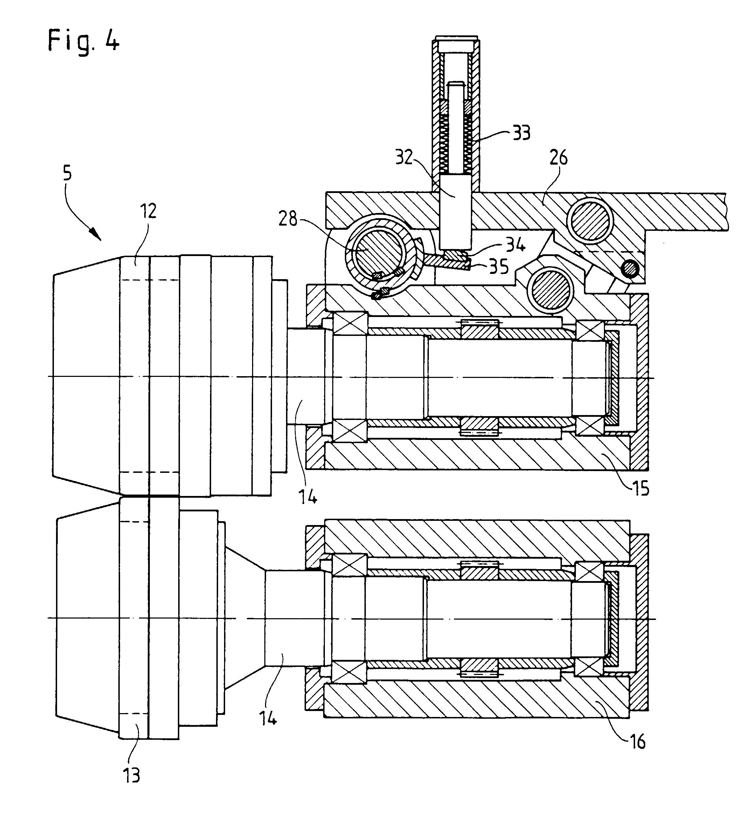

Die Mittenschnittschere 5 ist ähnlich wie die Kreismesserscheren 3 bzw. 4 aufgebaut, d.h. sie setzt sich aus einem oberen und einem unteren Kreismesser 12, 13 zusammen, die über Kreismesserwellen 14 in einem Ober- bzw. Untermessergehäuse 15 bzw. 16 (vgl. Fig. 4) gelagert sind. Zum Antrieb sowohl der Kreismesser 12, 13 der Mittenschnittschere 5 als auch der Kreismesser 9, 11 der Kreismesserscheren 3 bzw. 4 dienen Getriebemotoren 17; die Kreismesserscheren 3, 4 sind antriebslos, wenn die Kreismesser 9, 11 durch die Vorschubbewegung des zu besäumenden Bandes in Drehung versetzt werden.

Die Kreismesserscheren 3, 4 sind mit einer Messerspalt-Verstelleinrichtung entsprechend der vorgenannten EP 0 289 799 A ausgerüstet, d.h. insbesondere mit einem Querexzenter 18 versehen, der das obere Messergehäuse 6 mit dem feststehenden unteren Messergehäuse 7 gelenkig verbindet. Zur definierten Drehverstellung des Querexzenters 18 ist ein Getriebemotor 19 mit Bremse vorgesehen. Dem Querexzenter 18 ist außerdem jeweils ein Überlagerungsexzenter 20 zugeordnet. Die Kreismesserscheren 3 bzw. 4 sind für sich als Einheit auf einer Sohlplatte 21 verschiebbar angeordnet, wozu eine Gewindespindel 22 dient, wie in Fig. 2 schematisch gezeigt; die von einem nicht dargestellten Motor angetriebene Gewindespindel 22 verschiebt die beiden Kreismesserscheren 3 bzw. 4 zur Einstellung einer gewünschten Saumbreite.

Auf der Sohlplatte 21 ist eine Rahmenkonstruktion angeordnet, die aus einem Außenrahmen 23 und einem darin in Vertikalführungen 24 höhenverstellbaren, inneren Rahmen 25 besteht. Dieser weist einen in Bandlaufrichtung 2 galgenartig vorspringenden Tragarm 26 auf, in dem gemäß Fig. 4 das Obermessergehäuse 15 der Mittenschnittschere 5 beweglich eingehängt bzw. dort schwenkbeweglich gelagert und außerdem ein dem reversierbaren Querexzenter 18 der Messerspalt-Verstelleinrichtung der beiden Kreismesserscheren 3 bzw. 4 entsprechender, mittels Getriebemotor 27 verstellbarer Querexzenter 28 angeordnet ist. Hingegen ist das Untermessergehäuse 16 der Mittenschnittschere 5 fest mit dem inneren Rahmen 25 verbunden. Zum Spielausgleich im Bereich der Lagerungen für den Querexzenter 28 ist diesem am Obermessergehäuse 15 eine Druckstange 32 mit einem Federpaket 33 zugeordnet, die auf eine gebogene Außenfläche eines Druckstückes 34 eines mit dem Querexzenter 28 verbundenen Beaufschlagungsarmes 35 einen Druck ausübt.

Die Doppelrahmen-Bauweise ermöglicht es, das Obermessergehäuse 15 der Mittenschnittschere 5 beweglich anzuordnen und zwischen dem Tragarm 26 des in dem Außenrahmen 23 vertikal geführten inneren Rahmens 25 und dem Obermessergehäuse 15 eine Messerspalt-Verstelleinrichtung mit einem Querexzenter 28 vorzusehen. Weiterhin ist der innere Rahmen 25 und damit die von ihm getragene Mittenschnittschere 5 in ihrer Höhenlage verstellbar, wozu eine Hubeinrichtung 29 eingesetzt wird, die aus einerseits an der Sohlplatte 21 befestigten und andererseits mit ihren Kolbenstangen 30 am Rahmen 25 der Mittenschnittschere 5 angreifenden, hydraulischen oder pneumatischen Stellzylindern 31 besteht.

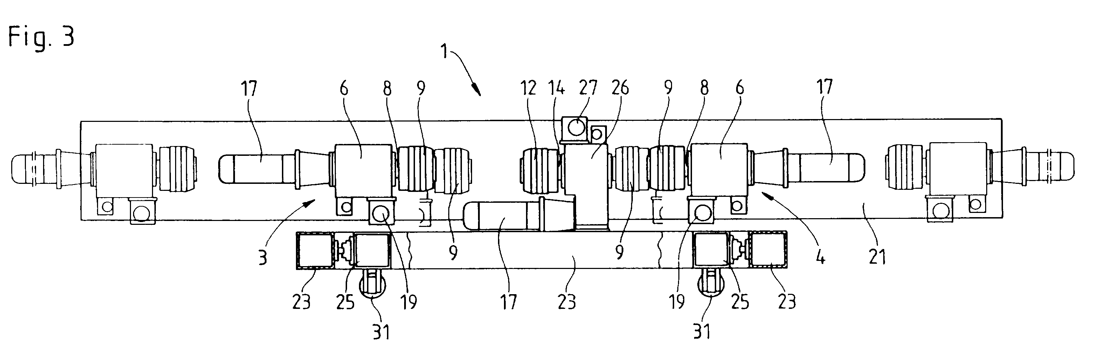

Wenn die Mittenschnittschere 5 - wie in Fig. 1 dargestellt - in ihre Außerbetriebsposition angehoben wird, können die beiden einander gegenüberliegenden Kreismesserscheren 3 bzw. 4 zum Besäumen schmaler Bänder nahe aufeinanderzu gefahren werden; die angehobene Mittenschnittschere 5 steht nicht hindernd im Wege. In der abgesenkten Betriebsposition taucht die Mittenschnittschere 5 in den Freiraum zwischen den gegenüberliegenden Kreismesserscheren 3 bzw. 4 ein, wie in Fig. 3 gezeigt, wobei sich ohne Einschränkung der minimalen Besäumbreite gleiche Achslagen der Kreismesser 12, 13 der Mittenschnittschere und der Kreismesser 9, 11 der Kreismesserscheren 3, 4 erreichen lassen, was es ermöglicht, kleine Bandbreitentoleranzen einzuhalten. Die Mindestbreite des zu besäumenden Bandes, um gleichzeitig auch einen Mittenschnitt durchführen zu können, ergibt sich aus Fig. 3 durch die in dünnen Linien gezeichnete, vorgerückte Position der Messerwellen 9 der Kreismesserscheren 3 bzw. 4.

## Patentansprüche

1. Scheranlage (1) zum Besäumen von Flachmaterial, insbesondere von Blechen und Bändern aus Metall, bestehend aus einer Kreismesserschere (3, 4) mit in einem Ober- und Untermessergehäuse (6, 7) gelagerten, die Kreismesser (9, 11) tragenden Kreismesserwellen (8, 10), wobei zur Einstellung des Messerspaltes und der Messerüberdeckung in Abhängigkeit von der Materialdicke und -festigkeit zwischen dem oberen und dem unteren Scherengehäuse ein diese Gehäuseteile verbindender Querexzenter (18) angeordnet ist, und einer Mittenschnittschere (5), die in einem Ober- und Untermessergehäuse gelagerte, Kreismesser (12, 13) tragende Kreismesserwellen (14) aufweist,
**gekennzeichnet durch**
einen die Mittenschnittschere (5) tragenden Rahmen (25) und eine einen reversierbaren Querexzenter (28) aufweisende Messerspalt-Verstelleinrichtung, die zwischen dem Rahmen (25) und dem oberen Kreismesser (12) der Mittenschnittschere (5) angeordnet ist und mit dem Querexzenter (28) am messerseitigen Ende des beweglich ausgebildeten Obermessergehäuses (15) angreift.

2. Scheranlage nach Anspruch 1,
**dadurch gekennzeichnet,**
daß das Obermessergehäuse (15) der Mittenschnittschere (5) beweglich in einem in Bandlängsrichtung galgenartig vorspringenden Tragarm (26) des Rahmens (25) eingehängt ist.

3. Scheranlage nach Anspruch 1 oder 2,
**dadurch gekennzeichnet,**
daß das Untermessergehäuse (16) der Mittenschnittschere (5) fest mit dem Rahmen (25) verbunden ist.

4. Scheranlage nach einem der Ansprüche 1 bis 3,
**dadurch gekennzeichnet,**
daß der Rahmen (25) der Mittenschnittschere (5) höhenverstellbar in einem Außenrahmen (23) angeordnet ist.

5. Scheranlage nach Anspruch 4,
**dadurch gekennzeichnet,**
daß der Außenrahmen (23) mit Vertikalführungen (24) für den Rahmen (25) der Mittenschnittschere (5) versehen ist.

6. Scheranlage nach einem der Ansprüche 1 bis 5,
**gekennzeichnet durch**
eine dem Rahmen (25) der Mittenschnittschere (5) zugeordnete Hubeinrichtung (29).

7. Scheranlage nach einem der Ansprüche 1 bis 6,
**dadurch gekennzeichnet,**
daß der Außenrahmen (23) auf einer Sohlplatte (21) angeordnet ist.

8. Scheranlage nach einem der Ansprüche 1 bis 7,
**dadurch gekennzeichnet,**
daß die Hubeinrichtung (29) aus einerseits an der Sohlplatte (21) befestigten und andererseits mit ihren Kolbenstangen (30) am Rahmen (25) der Mittenschnittschere (5) angreifenden Stellzylindern (31) besteht.

## Claims

1. Cutting installation (1) for trimming flat material, especially sheet and strips of metal, consisting of circular knife shears (3, 4) with circular knife shafts (8, 10) mounted in an upper and a lower knife housing (6, 7) and carrying the circular knives (9, 11), wherein a transverse eccentric (18) is arranged between the upper and the lower shears housings and connects these housings together for setting the knife gap and knife overlap in dependence on the material thickness and strength, and of centre cutting shears (15) which comprise circular knife shafts (14) mounted in an upper and a lower knife housing and carrying circular knives (12, 13), characterised by a frame (25), which carries the centre cutting shears (5), and a knife gap setting equipment, which comprises a reversible transverse eccentric (28) and which is arranged between the frame (25) and the upper circular knife (12) of the centre cutting shears (5) and engages by the transverse eccentric (28) at the end, which is at the knife side, of the movably constructed upper knife housing (15).

2. Cutting installation according to claim 1, characterised in that the upper knife housing (15) of the centre cutting shears (5) is movably suspended in a carrier arm (26), which protrudes in the strip longitudinal direction in gallows-like manner, of the frame (25).

3. Cutting installation according to claim 1 or 2, characterised in that the lower knife housing (16) of the centre cutting shears (5) is fixedly connected with the frame (25).

4. Cutting installation according to one of claims 1 to 3, characterised in that the frame (25) of the centre cutting shears (5) is arranged in an outer frame (23) to be adjustable in height.

5. Cutting installation according to claim 4, characterised in that the outer frame (23) is provided with vertical guides (24) for the frame (25) of the centre cutting shears (5).

6. Cutting installation according to one of claims 1 to 5, characterised by a lifting device (29) associated with the frame (25) of the centre cutting shears (5).

7. Cutting installation according to one of claims 1 to 6, characterised in that the outer frame (23) is arranged on a bedplate (21).

8. Cutting installation according to one of claims 1 to 7, characterised in that the lifting device (29) consists of setting cylinders (31) fastened at one end to the bedplate (21) and engaging at their other end by their piston rods (30) at the frame (25) of the centre cutting shears (5).

## Revendications

1. Installation à cisaille (1) pour rogner des matériaux plats, en particulier des tôles et des bandes de métal, comprenant une cisaille à couteaux circulaires (3, 4) comprenant des arbres à couteaux (8, 10) montés en rotation dans un boîtier de couteau supérieur et dans un boîtier de couteau inférieur (6, 7) et portant les couteaux circulaires (9, 11), dans laquelle on prévoit pour le réglage de l'intervalle entre couteaux et du chevauchement des couteaux en fonction de l'épaisseur et de la résistance des matériaux, un excentrique transversal (18) agencé entre le boîtier de cisaille supérieur et le boîtier de cisaille inférieur et reliant ces parties de boîtier, et comprenant une cisaille de coupe centrale (15) qui comporte des arbres à couteaux (14), montés en rotation dans un boîtier de couteau supérieur et dans un boîtier de couteau inférieur et portant des couteaux circulaires (12, 13),
caractérisée par un cadre (25) portant la cisaille de coupe centrale (5) et un dispositif de réglage de l'intervalle entre couteaux, lequel comprend un excentrique transversal (28) réversible et est agencé entre le cadre (25) et le couteau circulaire supérieur (12) de la cisaille centrale (5), et attaque au moyen de l'excentrique transversal (28) l'extrémité côté couteau du boîtier supérieur (15) réalisé de façon mobile.

2. Installation à cisaille selon la revendication 1, caractérisée en ce que le boîtier de couteau supérieur (15) de la cisaille centrale (5) est suspendu de façon mobile dans un bras porteur (26) du cadre (25), faisant saillie à la manière d'une potence dans la direction longitudinale de la bande.

3. Installation à cisaille selon l'une ou l'autre des revendications 1 et 2, caractérisée en ce que le boîtier de couteau inférieur (16) de la cisaille centrale (5) est fermement relié au cadre (25).

4. Installation à cisaille selon l'une des revendications 1 à 3, caractérisée en ce que le cadre (25) de la cisaille centrale (5) est agencé avec faculté de réglage en hauteur dans un cadre extérieur (23).

5. Installation à cisaille selon la revendication 4, caractérisée en ce que le cadre extérieur (23) est pourvu de guidages verticaux (24) pour le cadre (25) de la cisaille centrale (5).

6. Installation à cisaille selon l'une des revendications 1 à 5, caractérisée par un dispositif de levage (29) associé au cadre (25) de la cisaille centrale (5).

7. Installation à cisaille selon l'une des revendications 1 à 6, caractérisée en ce que le cadre extérieur (23) est agencé sur une plaque de semelle (21).

8. Installation à cisaille selon l'une des revendications 1 à 7, caractérisée en ce que le dispositif de levage (29) est constitué de cylindres de positionnement (31), qui sont fixés d'une part sur la plaque de semelle (21), et qui attaquent d'autre part le cadre (25) de la cisaille centrale (5) au moyen de leurs tiges de piston (30).
